# EUROPEAN PATENT SPECIFICATION

(11) **EP 1 863 219 B1**
(45) Date of publication and mention of the grant of the patent: **19.05.2010**
(21) Application number: 07103322.9
(22) Date of filing: 01.03.2007
(51) Int. Cl.: H04L 12/18

(54) **Method and system for processing abnormally becoming power off of a terminal of multicast user**
Verfahren und System zur Verarbeitung unbeabsichtigter Abschaltungen eines Endgerätes für Multicast-Benutzer
Procédé et système pour le traitement d'un arrêt anormal d'un terminal d'utilisateur de multidiffusion

(30) Priority: 29.05.2006 CN 200610060903
(43) Date of publication of application: 05.12.2007
(73) Proprietor: Huawei Technologies Co., Ltd., Longgang District, Shenzhen Guangdong 518129 (CN)
(72) Inventor: Wei, Jiahong, 518129, Guangdong (CN); Li, Jun, 518129, Guangdong (CN); Zhang, Jun, 518129, Guangdong (CN)
(74) Representative: Thun, Clemens

(56) References cited:
- EP-A- 1 119 134
- EP-A- 1 734 688
- WO-A-2006/027380
- WITTMANN R ET AL: "Multicast Communication: Protocols and Applications" MORGAN KAUFFMAN PUBLISHERS, May 2000 (2000-05), pages 62-67, XP002432980
- CEREVA C ET AL: "Internet Group Management Protocol, Version 3" REQUEST FOR COMMENTS 3376, October 2002 (2002-10), XP015009135
- SHOAF S ET AL: "Introduction to IGMP for IPTV Networks" JUNIPER NETWORKS, INC. WHITE PAPER, [Online] June 2006 (2006-06), XP002432981 Retrieved from the Internet: URL:http://www.juniper.net/solutions/liter ature/white_papers/200188.pdf> [retrieved on 2007-05-09]

## Description

### Field of the Technology

The present invention relates to data transmission technologies, and more particularly, to multicast processing technologies.

### Background of the Invention

Multicast is a network technology allowing one or more senders (multicast source) to send a single data packet to multiple receivers once.

To implement an Internet Protocol (IP) multicast transmission, a multicast source, multicast receivers and a low layer network between them must support the multicast. The multicast source sends a data packet to a specific multicast group and then all the receivers whose addresses belong to the specific multicast group can receive the data packet. A host (a user terminal) joins a multicast group using Internet Group Management Protocol (IGMP). Furthermore, the host can leave a multicast group dynamically, that is to say, the state of a member of a multicast group can be changed at any moment.

When joining in a multicast group, a host notifies a multicast router of the IP sub-network where the host is located by sending a "membership reporting" message. An IP module of the host makes corresponding preparation to receive data transmitted from the multicast group. If the host is the first one joining in the multicast group in the IP sub-network where the host is located, the multicast router is added to a multicast tree through route information exchanging.

After a host joining in a multicast group, a network interface card of the host of the receiver begins to intercept multicast Media Access Control (MAC) addresses relating to the address of the multicast group. A multicast router sends an information packet of a sender to a network section having a receiver hop by hop. A multicast router in a Local Area Network (LAN) transforms a group address carried in the information packet into a MAC address relating to the group address. A receiver intercepts this address, and after receiving the information packet, obtains the multicast data packet of the IP layer and transmits the multicast data packet to an upper layer.

In general, one of the following two methods is adopted when a host exits a multicast group.
1. A host will quit by itself when leaving a multicast group and the multicast router queries the group addresses (224.0.0.1) of all the hosts of an IP sub-network using a "member qualification query" periodically. The multicast router will not forward the data of a multicast group in an IP sub-network if the multicast router has confirmed there is no member of the multicast group in the sub-network. At the same time, the multicast router will be deleted from the specific multicast group distribution tree through route information exchanging. In such a method, there is a time delay for a multicast router confirming there is no member of a multicast group in an IP sub-network. Delay of a certain time in this method will be brought on no matter a user terminal quits normally or becomes power off abnormally.
2. When leaving a multicast group, a host notifies a multicast router in a sub-network initiatively. Then the multicast router queries all the multicast groups in the IP sub-network at once and stops forwarding for a specific multicast group if there is no response. By adopting such a method, the multicast can be stopped in a real-time manner. However, in the case that a user terminal becomes power off abnormally, the multicast router cannot initiate the query procedure because the host cannot notify the multicast router initiatively. Therefore, in this method, the problem caused by abnormally becoming power off of a user terminal cannot be solved.

Besides the two methods above, a multicast router also supports a multicast group membership query function, to query about members in a group. The multicast group member query function includes a general group query and a specific group query. The general group query is to query about members of all the groups, no matter which group the queried member belongs to. The specific group query is to query about the members of a specific group.

After a user terminal becomes power off abnormally, a multicast router can stop forwarding the multicast data after confirming there is no member in the multicast group using the query method above. However, there is a problem that the query is not in a real-time manner because there is a certain interval in such a query.

In an Internet Protocol Television (IPTV) service, each channel is carried by one multicast group in general. When a user wants to watch a certain channel, the user terminal will send an IGMP Join message. Upon receiving the IGMP Join message, network equipment adds the user to a corresponding multicast group and forwards messages of the multicast group to the user. If the user switches the channel, the user terminal will send an IGMP Leave message to leave the channel mentioned above and send another IGMP Join message to join a new channel. Upon receiving the IGMP Leave message, the network equipment sends a specific group query message. If no response is received, which denotes that there is no other users watching the program of the channel, the network equipment stops forwarding data of the multicast group and deletes the user in the multicast group. Upon receiving the IGMP Join message, the network equipment adds the user to a new multicast group and forwards the messages of the multicast group to the user.

A description is hereinafter given by taking a Digital Subscriber Line (DSL) of a Digital Subscriber Line Access Multiplexer (DSLAM) as an example.

When a user switches a TV channel, the user terminal sends an IGMP Leave message to leave a channel (corresponding to a multicast group) and then sends an IGMP Join message to join a new channel (corresponding to another multicast group). In general, when a user stops watching TV and turns off the user terminal, the user terminal sends an IGMP Leave message to leave the channel which the user watches. Upon receiving the IGMP Leave message, the DSLAM stops forwarding data flow of the multicast group of the channel.

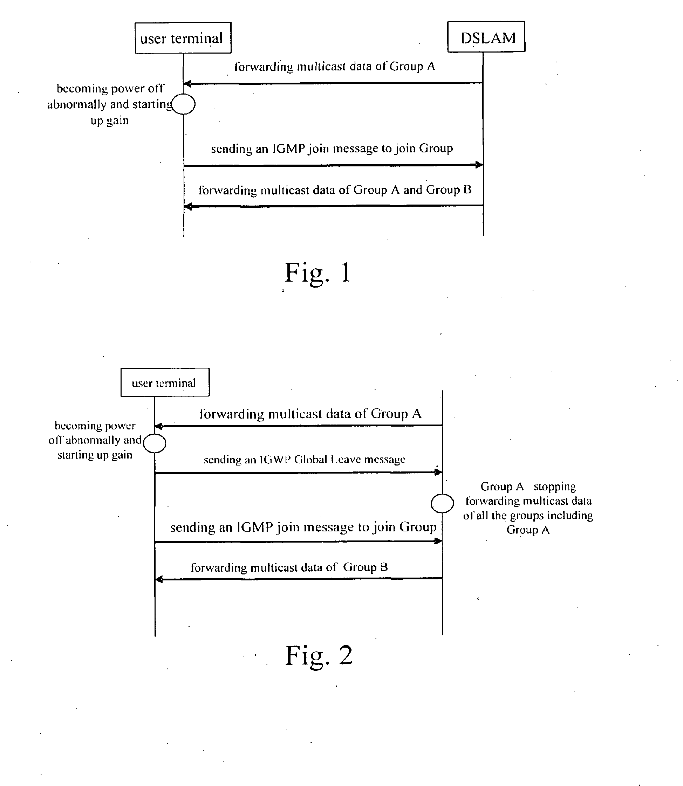

However, as shown in Fig.1, the user terminal will not send an IGMP Leave message when becoming power off abnormally. The DSLAM will keep forwarding the data flow of the multicast group of the channel to the user because no IGMP Leave message of the user terminal is received. When being electrified and starting up again, the user terminal may send an IGMP Join message to join another channel. Thus, to the DSLAM, the user watches two channels simultaneously, resulting in that the DSLAM simultaneously forwards contents of the new channel and the old channel to the DSL port. There are the following problems in such a processing method.

Bandwidth is wasted and bandwidths of other services are occupied, which may result in that other services, such as a data service (accessing the network), have not enough bandwidth. In an even worse case, traffic may exceed the line bandwidth of the DSL, resulting in that packet loss occurs and thereby any of the channels cannot be watched.

International patent application WO 2006/027380 Aprovides a method for multicasting packets in a subscriber network. WO 2006/027380 A1 is to achieve the purpose of not simply forwarding packets towards all ports but forwarding toward a port having a device that is active in a multicast group. The "selective forward" is in contrast to the traditional forwarding wherein the ports are flooded with the multicast packets.

### Summary of the Invention

A method and system for processing abnormally becoming power off of a terminal of multicast user are provided, so as to solve the problem that when becoming power off abnormally and starting up again, terminal of a multicast user notifies multicast device to delete the multicast group in which the user terminal joined before becoming power off.

Embodiments of the present invention adopt the following technical solutions.

A method for processing abnormally becoming power off of a multicast user terminal includes:
deleting, by a multicast device, in a user port corresponding to the multicast user terminal, all the multicast groups which the user has joined and are not being watched by any other multicast user terminal, upon receipt of a notification from the multicast user terminal for leaving all multicast groups; wherein the notification is sent by the multicast user terminal when the multicast user terminal having become power off abnormally, is starting up again.

A system for processing abnormally becoming power off of a multicast user terminal, includes:
a multicast user terminal, adapted for sending a notification for leaving all the multicast groups which the user has joined when the multicast user terminal having become power off abnormally, is starting up again; and
a multicast device, adapted for deleting in a user port corresponding to the multicast user terminal, all the multicast groups which the user has joined and are not being watched by any other user terminal, upon receipt of the notification from the multicast user terminal for leaving all the multicast groups which the user has joined.

Embodiments of the present invention overcome disadvantage of the prior art, specifically, with a technical solution, in which a user terminal sends a global leave message to a multicast device when becoming power off abnormally and starting up again, the multicast device deletes a multicast group which is not watched by a user according to the message. A problem that the multicast device keeps forwarding the data flow of the multicast group in which the user terminal joined before becoming power off to the user terminal, when the user terminal becomes power off and starts up again is solved. The problem above is solved based on existing processing mechanism of the multicast protocol and the standard IGMP, thereby bandwidth of a line can be saved effectively, which enables bandwidths of other services to be guaranteed better.

### Brief Description of the Drawings

Fig. 1 shows a flow chart of the processing when a user terminal becomes power off and starts up again in the prior art.
Fig. 2 shows a flow chart of a first embodiment of the present invention.
Fig. 3 shows a flow chart of a second embodiment of the present invention.
Fig. 4 shows a flow chart of a third embodiment of the present invention.

### Embodiments of the Invention

Embodiments of the present invention adopt a technical solution, in which a user terminal sends an IGMP Global Leave message to a multicast device when becoming power off and starting up again. Upon receiving the IGMP Global Leave message, the multicast device first deletes a multicast group which is not watched by a terminal in the user port corresponding to the user terminal, then adds the user terminal to a multicast group corresponding to a channel which the user terminal wants to watch according to an IGMP Join message sent by the user terminal.

Detailed descriptions are hereinafter given by taking a DSLAM and an STB as examples.

When becoming power off and starting up again, a user terminal, i.e, an STB, first sends an IGMP Global Leave message, in which a group address is 0.0.0.0 and denoting that the IGMP Leave message is a global leave message used for the user terminal leaving all the multicast groups.

There are three processing methods after the DSLAM receiving the IGMP Global Leave message from the user port.
1) Delete the user in all the multicast groups.
2) Send a specific group query message to determine whether an existing multicast group in the port is watched by a terminal, time and interval of sending the specific group query message are configurable.
3) Send a general group query message to find out a multicast group in which there is no member, time and interval of sending the general group query message are configurable.

A first Embodiment: the flow chart corresponding to the first processing method above is shown in Fig.2.
1. The user terminal is watching a program of group A before the user terminal becomes power off.
2. When becoming power off and starting up again, the user terminal sends an IGMP Global Leave message to notify the DSLAM of the request of the user terminal for leaving all the multicast groups.
3. Upon receiving the IGMP Global Leave message, the DSLAM deletes all the multicast groups which the user port corresponding to the user terminal has joined and stops forwarding messages of group A at the same time.
4. The user terminal sends an IGMP Join message to join group B.
5. The DSLAM forwards data flows of group B to the user port and the user terminal can watch a program of group B normally.

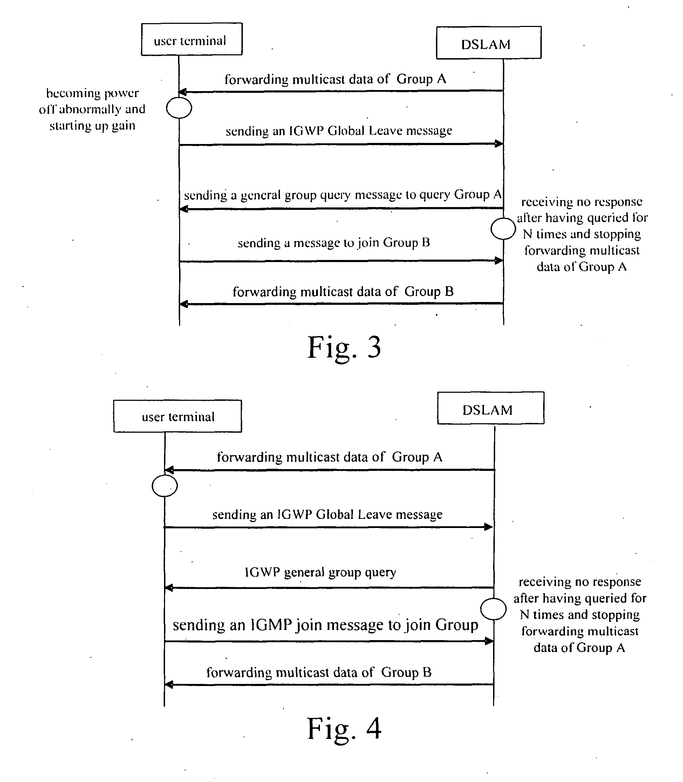

A second Embodiment: the flow chart corresponding to the second processing method above is shown in Fig.3.
1. The user terminal is watching a program of group A before the user terminal becomes power off.
2. When becoming power off and starting up again, the user terminal sends an IGMP Global Leave message to notify the DSLAM of the request of the user terminal for leaving all the multicast groups.
3. Upon receiving the IGMP Global Leave message, the DSLAM sends a specific group query message, i.e., an IGMP Query of A (if the DSLAM records that there is another multicast group being watched in the user port, a specific group query message will be sent for the multicast group), to query whether there is a user terminal watching program of group A in the user port.
4. If no user terminal is watching programs in the home network and the DSLAM does not receive a query response for N times, the DSLAM deletes all the multicast groups which the user has joined. If another user terminal, i.e., user terminal B, is watching program of group A, user terminal B will send a query response message to notify the DSLAM that a user is watching program of group A and the DSLAM will reserve group A and delete other multicast groups which the user has joined.
5. The user terminal sends an IGMP Join message to join group B.
6. The DSLAM forwards data flows of group B to the user port and then the user terminal can watch a program of group B normally.

A third Embodiment: the flow chart corresponding to the third processing method above is shown in Fig.4.
1. The user terminal is watching a program of group A before the user terminal becomes power off.
2. When becoming power off and starting up again, the user terminal sends an IGMP Global Leave message.
3. Upon receiving the IGMP Global Leave message, the DSLAM sends a general group query message, i.e., an IGMP General Query message, to query whether there are other user terminals watching the multicast program in the user port.
4. If no other user terminal is watching the program in the user port and the DSLAM does not receive a query response for N times, the DSLAM will delete all the multicast groups which the user has joined. If there is another user terminal, i.e., user terminal B, is watching program of group C, user terminal B will send a query response message to notify the DSLAM that a user is watching the program of group C and the DSLAM will reserve group C and delete other multicast groups which the user has joined.
5. The user terminal sends an IGMP Join message to join group B.
6. The DSLAM forwards data flows of group B to the user port and the user terminal can watch a program of group B normally.

## Claims

1. A method for processing abnormally becoming power off of a multicast user terminal, comprising:
deleting, by a multicast device, in a user port corresponding to the multicast user terminal, all the multicast groups which the user has joined and are not being watched by any other user terminal, upon receipt of a notification from the multicast user terminal for leaving all multicast groups; wherein the notification is sent by the multicast user terminal when the multicast user terminal having become power off abnormally, is starting up again.

2. The method of Claim 1, wherein the notification from the multicast user terminal for leaving all multicast groups is a Global Leave message.

3. The method of Claim 2, wherein a group address in the Global Leave message is 0.0.0.0, which is used for denoting a request of the multicast user terminal for leaving all multicast groups.

4. The method of Claim 1, wherein the process of deleting all the multicast groups corresponding to the multicast user terminal and not being watched by any other multicast user terminal in the user port comprises:
sending a general group query message to the user port corresponding to the multicast user terminal to query whether there is a multicast user terminal receiving a multicast data flow in the user port corresponding to the multicast user terminal;
deleting all the multicast groups in the user port corresponding to the multicast user terminal if receiving no query response;
reserving the multicast groups which are still watched by a multicast user terminal in the user port if receiving a query response.

5. The method of Claim 1, wherein the process of deleting all the multicast groups corresponding to the multicast user terminal and not watched by any other multicast user terminal in the user port comprises:
sending a specific group query message to the user port corresponding to the multicast user terminal to query whether there is a multicast user terminal receiving a multicast data flow in the user port corresponding to the multicast user terminal;
deleting all the multicast groups in the user port if receiving no query response;
reserving the multicast groups which are still watched by a multicast user terminal in the user port if receiving a query response.

6. The method of Claim 5 or 4, wherein the query message is sent for a predefined number of times.

7. The method of Claim 1, after the multicast device deleting all the multicast groups which are not watched by any multicast user terminal in the user port, the method further comprising:
sending, by the multicast user terminal, a multicast group join message to the multicast device after being powered off and started up again; and
forwarding, by the multicast device, a multicast data flow to the user port corresponding to the multicast user terminal.

8. A system for processing abnormally becoming power off of a multicast user terminal, comprising:
a multicast user terminal, adapted for sending a notification for leaving all the multicast groups which the user has joined when the multicast user terminal having become power off abnormally, is starting up again; and
a multicast device, adapted for deleting in a user port corresponding to the multicast user terminal, all the multicast groups which the user has joined and are not being watched by any other user terminal, upon receipt of the notification from the multicast user terminal for leaving all the multicast groups which the user has joined.

9. The system of Claim 8, wherein the multicast user terminal notifies the multicast device that the multicast user terminal requests to leave all multicast groups by sending a Global Leave message.

10. The system of Claim 8, wherein the multicast user terminal is a Set-Top Box, STB, while the multicast device is a Digital Subscriber Line Access Multiplexer, DSLAM.

## Patentansprüche

1. Verfahren zum Verarbeiten eines anomalen Abschaltens eines Multicast-Anwenderendgeräts, das Folgendes umfasst:
Löschen, durch eine Multicast-Vorrichtung, in einem dem Multicast-Anwenderendgerät entsprechenden Anwender-Port, aller Multicast-Gruppen, denen der Anwender beigetreten ist und die nicht durch irgendein anderes Anwenderendgerät beobachtet werden, bei Empfang einer Meldung von dem Multicast-Anwenderendgerät zum Verlassen aller Multicast-Gruppen; wobei die Meldung durch das Multicast-Anwenderendgerät gesendet wird, wenn das Multicast-Anwenderendgerät, das anomal abgeschaltet worden ist, erneut gestartet wird.

2. Verfahren nach Anspruch 1, wobei die Meldung von dem Multicast-Anwenderendgerät zum Verlassen aller Multicast-Gruppen eine Global-Leave-Nachricht ist.

3. Verfahren nach Anspruch 2, wobei eine Gruppenadresse in der Global-Leave-Nachricht gleich 0.0.0.0 ist, die verwendet wird, um eine Anforderung des Multicast-Anwenderendgeräts zum Verlassen aller Multicast-Gruppen zu bezeichnen.

4. Verfahren nach Anspruch 1, wobei der Prozess des Löschens aller Multicast-Gruppen, die dem Multicast-Anwenderendgerät entsprechen und die nicht durch irgendein anderes Multicast-Anwenderendgerät in dem Anwender-Port beobachtet werden, Folgendes umfasst:
Senden einer allgemeinen Gruppenanfragenachricht an den Anwender-Port, der dem Multicast-Anwenderendgerät entspricht, um anzufragen, ob ein Multicast-Anwenderendgerät vorhanden ist, das einen Multicast-Datenstrom in dem Anwender-Port, der dem Multicast-Anwenderendgerät entspricht, empfängt;
Löschen aller Multicast-Gruppen in dem Anwender-Port, der dem Multicast-Anwenderendgerät entspricht, falls keine Anfragenantwort empfangen wird;
Reservieren der Multicast-Gruppen, die weiterhin durch ein Multicast-Anwenderendgerät beobachtet werden, in dem Anwender-Port, falls eine Anfragenantwort empfangen wird.

5. Verfahren nach Anspruch 1, wobei der Prozess des Löschens aller Multicast-Gruppen, die dem Multicast-Anwenderendgerät entsprechen und die nicht durch irgendein anderes Multicast-Anwenderendgerät in dem Anwender-Port beobachtet werden, Folgendes umfasst:
Senden einer spezifischen Gruppenanfragennachricht zu dem Anwender-Port, der dem Multicast-Anwenderendgerät entspricht, um anzufragen, ob ein Multicast-Anwenderendgerät vorhanden ist, das einen Multicast-Datenstrom in dem Anwender-Port, der dem Multicast-Anwenderendgerät entspricht, empfängt;
Löschen aller Multicast-Gruppen in dem Anwender-Port, falls keine Anfragenantwort empfangen wird;
Reservieren der Multicast-Gruppen, die weiterhin durch ein Multicast-Anwenderendgerät beobachtet werden, in dem Anwender-Port, falls eine Anfragenantwort empfangen wird.

6. Verfahren nach Anspruch 5 oder 4, wobei die Anfragennachricht in einer vorgegebenen Anzahl gesendet wird.

7. Verfahren nach Anspruch 1, wobei das Verfahren, nachdem die Multicast-Vorrichtung alle Multicast-Gruppen gelöscht hat, die nicht durch irgendein Multicast-Anwenderendgerät im Anwender-Port beobachtet werden, ferner Folgendes umfasst:
Senden einer Multicast-Gruppen-Beitrittsnachricht durch das Multicast-Anwenderendgerät zu der Multicast-Vorrichtung, nachdem es abgeschaltet und erneut gestartet worden ist; und
Weiterleiten eines Multicast-Datenstroms durch die Multicast-Vorrichtung zu dem Anwender-Port, der dem Multicast-Anwenderendgerät entspricht.

8. System zum Verarbeiten eines anomalen Abschaltens eines Multicast-Anwenderendgeräts, das Folgendes umfasst:
ein Multicast-Anwenderendgerät, das dazu ausgelegt ist, eine Meldung zum Verlassen aller Multicast-Gruppen, denen sich der Anwender angeschlossen hat, zu senden, wenn das Multicast-Anwenderendgerät, das anomal abgeschaltet worden ist, erneut gestartet wird; und
eine Multicast-Vorrichtung, die dazu ausgelegt ist, in einem Anwender-Port, der dem Multicast-Anwenderendgerät entspricht, alle Multicast-Gruppen zu löschen, denen sich der Anwender angeschlossen hat und die nicht durch ein anderes Anwenderendgerät beobachtet werden, wenn die Meldung von dem Multicast-Anwenderendgerät zum Verlassen aller Multicast-Gruppen, denen sich der Anwender angeschlossen hat, empfangen wird.

9. System nach Anspruch 8, wobei das Multicast-Anwenderendgerät der Multicast-Vorrichtung durch Senden einer Global-Leave-Nachricht meldet, dass das Multicast-Anwenderendgerät zum Verlassen aller Multicast-Gruppen auffordert.

10. System nach Anspruch 8, wobei das Multicast-Anwenderendgerät eine Settop-Box, STB, ist, während die Multicast-Vorrichtung ein digitaler Teilnehmerleitungs-Zugriffsmultiplexer, DSLAM (Digital Subscriber Line Access Multiplexer), ist.

## Revendications

1. Procédé de traitement d'un arrêt anormal d'un terminal d'utilisateur de multidiffusion, comprenant :
la suppression, par un dispositif de multidiffusion, dans un port d'utilisateur correspondant au terminal d'utilisateur de multidiffusion, de tous les groupes de multidiffusion auxquels l'utilisateur s'est joint et qui ne sont observés par aucun autre terminal d'utilisateur, sur réception d'une notification depuis le terminal d'utilisateur de multidiffusion de sortir de tous les groupes de multidiffusion ; la notification étant envoyée par le terminal d'utilisateur de multidiffusion quand le terminal d'utilisateur de multidiffusion s'étant arrêté anormalement recommence à fonctionner.

2. Procédé selon la revendication 1, dans lequel la notification depuis le terminal d'utilisateur de multidiffusion de sortir de tous les groupes de multidiffusion est un message de Sortie Globale.

3. Procédé selon la revendication 2, dans lequel une adresse de groupe dans le message de Sortie Globale est 0.0.0.0, laquelle sert à désigner une requête de sortie de tous les groupes de multidiffusion par le terminal d'utilisateur de multidiffusion.

4. Procédé selon la revendication 1, dans lequel le processus de suppression de tous les groupes de multidiffusion correspondant au terminal d'utilisateur de multidiffusion et n'étant observés par aucun autre terminal d'utilisateur de multidiffusion dans le port d'utilisateur comprend :
l'envoi d'un message d'interrogation de groupe général au port d'utilisateur correspondant au terminal d'utilisateur de multidiffusion pour demander si un terminal d'utilisateur de multidiffusion reçoit ou non un flux de données de multidiffusion dans le port d'utilisateur correspondant au terminal d'utilisateur de multidiffusion ;
la suppression de tous les groupes de multidiffusion dans le port d'utilisateur correspondant au terminal d'utilisateur de multidiffusion en cas de non-réception d'une réponse à l'interrogation ;
la réserve des groupes de multidiffusion qui sont toujours observés par un terminal d'utilisateur de multidiffusion dans le port d'utilisateur en cas de réception d'une réponse à l'interrogation.

5. Procédé selon la revendication 1, dans lequel le processus de suppression de tous les groupes de multidiffusion correspondant au terminal d'utilisateur de multidiffusion et observés par aucun autre terminal d'utilisateur de multidiffusion dans le port d'utilisateur comprend :
l'envoi d'un message d'interrogation de groupe spécifique au port d'utilisateur correspondant au terminal d'utilisateur de multidiffusion pour demander si un terminal d'utilisateur de multidiffusion reçoit ou non un flux de données de multidiffusion dans le port d'utilisateur correspondant au terminal d'utilisateur de multidiffusion ;
la suppression de tous les groupes de multidiffusion dans le port d'utilisateur en cas de non-réception d'une réponse à l'interrogation ;
la réserve des groupes de multidiffusion qui sont toujours observés par un terminal d'utilisateur de multidiffusion dans le port d'utilisateur en cas de réception d'une réponse à l'interrogation.

6. Procédé selon la revendication 5 ou 4, dans lequel le message d'interrogation est envoyé un nombre prédéfini de fois.

7. Procédé selon la revendication 1, après la suppression par le dispositif de multidiffusion de tous les groupes de multidiffusion qui ne sont observés par aucun terminal d'utilisateur de multidiffusion dans le port d'utilisateur, comprenant en outre :
l'envoi, par le terminal d'utilisateur de multidiffusion, d'un message de participation à un groupe de multidiffusion au dispositif de multidiffusion qui s'était arrêté et qui recommence à fonctionner ; et
la transmission, par le dispositif de multidiffusion, d'un flux de données de multidiffusion au port d'utilisateur correspondant au terminal d'utilisateur de multidiffusion.

8. Système de traitement d'un arrêt anormal d'un terminal d'utilisateur de multidiffusion, comprenant :
un terminal d'utilisateur de multidiffusion, adapté pour envoyer une notification de sortie de tous les groupes de multidiffusion auxquels l'utilisateur s'est joint quand le terminal d'utilisateur de multidiffusion s'étant arrêté anormalement recommence à fonctionner ; et
un dispositif de multidiffusion, adapté pour supprimer dans un port d'utilisateur correspondant au terminal d'utilisateur de multidiffusion, tous les groupes de multidiffusion auxquels l'utilisateur s'est joint et qui ne sont observés par aucun autre terminal d'utilisateur, sur réception de la notification de sortir de tous les groupes de multidiffusion auxquels s'est joint l'utilisateur depuis le terminal d'utilisateur de multidiffusion.

9. Système selon la revendication 8, dans lequel le terminal d'utilisateur de multidiffusion notifie le dispositif de multidiffusion que le terminal d'utilisateur de multidiffusion demande de sortir de tous les groupes de multidiffusion en envoyant un message de Sortie Globale.

10. Système selon la revendication 8, dans lequel le terminal d'utilisateur de multidiffusion est un boîtier décodeur, STB, tandis que le dispositif de multidiffusion est un Multiplexeur d'Accès de Ligne d'Abonné Numérique, DSLAM.
